**Europäisches Patentamt**

**European Patent Office**

**Office européen des brevets**

(11) Veröffentlichungsnummer : **0 106 257**
**B1**

(19)

(12) **EUROPÄISCHE PATENTSCHRIFT**

(45) Veröffentlichungstag der Patentschrift :
25.03.87

(51) Int. Cl.⁴ : **B 64 C 11/18**

(21) Anmeldenummer : **83109877.7**

(22) Anmeldetag : **04.10.83**

(54) **Schuberzeugungsorgan, insbesondere für den Vortrieb von Luftfahrzeugen, wie Propeller oder dergleichen.**

(30) Priorität : **09.10.82 DE 3237518**
**25.03.83 DE 3310937**

(43) Veröffentlichungstag der Anmeldung :
**25.04.84 Patentblatt 84/17**

(45) Bekanntmachung des Hinweises auf die Patenterteilung : **25.03.87 Patentblatt 87/13**

(84) Benannte Vertragsstaaten :
**FR GB IT**

(56) Entgegenhaltungen :
**GB-A- 2 059 373**

(73) Patentinhaber : **DORNIER GMBH**
**Postfach 1420**
**D-7990 Friedrichshafen 1 (DE)**

(72) Erfinder : **Zimmer, Herbert, Dr.**
**Virchowstrasse 21**
**D-7990 Friedrichshafen (DE)**
Erfinder : **Dathe, Ingo, Dipl.-Ing.**
**Spiegelberg 15**
**D-7997 Immenstaad (DE)**
Erfinder : **Hoffmann, Reinhard, Dipl.-Ing.**
**Lindenweg 5a**
**D-8204 Brannenburg (DE)**
Erfinder : **Hora, Peter, Dipl.-Ing.**
**Flurweg 6**
**D-8261 Stephanskirchen (DE)**
Erfinder : **Wortmann, Franz Xaver, Prof. Dr.-Ing.**
**Beethovenstrasse 4**
**D-7030 Böblingen (DE)**

(74) Vertreter : **Landsmann, Ralf, Dipl.-Ing.**
**Kleeweg 3**
**D-7990 Friedrichshafen 1 (DE)**

**Beschreibung**

Schuberzeugungsorgan, insbesondere für den Vortrieb von Luftfahrzeugen, wie Propeller oder dergleichen.

Die Erfindung betrifft Schuberzeugungsorgane, insbesondere für den Vortrieb von Luftfahrzeugen, wie Propeller oder dergleichen.

In der Vergangenheit wurden zur Leistungssteigerung von Flugzeugen der Allgemeinen Luftfahrt zellenseitig und insbesondere bei der Auslegung von Tragflügeln erhebliche Anstrengungen unternommen, aus denen wesentliche Leistungsverbesserungen resultieren.

Hingegen sind bisher für Propeller bzw. Luftschrauben, deren Hauptaufgabe in der Umwandlung der zugeführten Motorleistung in Vortriebsleistung besteht, keine sehr erfolgreichen Aktivitäten bekannt geworden. Die Leistung von Propellern wurde in der Vergangenheit nur unwesentlich verbessert, obwohl diese Antriebsart ein Schubpotential besitzt, das noch erheblich stärker ausgeschöpft werden kann.

Derzeitig im Einsatz befindliche Propeller erzielen, wie seit langer Zeit unverändert, im Stand nur etwa 50 bis 70 % und im Reiseflug etwa 90 % der nach der Impulstheorie maximal möglichen Propellerschubwerte.

Aufgabe der vorliegenden Erfindung ist es, bei gleichem Propellerdurchmesser, gleicher Leistung und gleicher Drehzahl gegenüber bisherigen Propellerausbildungen die Propellerschubleistung durch aerodynamische Maßnahmen zu verbessern. Dabei soll im Schnellflug ein Abfall der Leistung nicht eintreten und die Schallabstrahlung reduziert werden.

Erfindungsgemäss wird die gestellte Aufgabe dadurch gelöst, dass die Propellerblätter über ihre Länge bzw. den Propellerradius drei Abschnitte gleicher bzw. annähernd gleicher Längserstreckung aufweisen, wobei im inneren, den Nabenbereich einschliessenden Abschnitt über die Blattlänge die grösste Wölbungshöhe, bezogen auf die Blatt-Tiefe, in Richtung auf die Blattspitze linear bzw. annähernd linear abnehmend verläuft und sich die Lage der grössten Wölbungshöhe, bezogen auf die Blatt-Tiefe, in Richtung zur Blatthinterkante hin linear bzw. annähernd linear verlagert, im mittleren Abschnitt über die Blattlänge die grösste Wölbungshöhe, bezogen auf die Blatt-Tiefe, linear bzw. annähernd linear zunehmend verläuft und sich die Lage der grössten Wölbungshöhe anschliessend an den Verlauf des inneren Abschnittes, bezogen auf die Blatt-Tiefe zur Blatthinterkante hin, linear bzw. annähernd linear verlagert und im äusseren Abschnitt über die Blattlänge die grösste Wölbungshöhe, bezogen auf die Blatt-Tiefe, elliptisch bzw. annähernd elliptisch abnehmend verläuft und die Lage der grössten Wölbungshöhe, bezogen auf die Blatt-Tiefe, anschliessend an den mittleren Abschnitt, konstant bzw. annähernd konstant bleibt.

Vorteilhafte Ausgestaltungen sind Gegenstände von Unteransprüchen.

Mit der erfindungsgemässen Ausbildung der Propellerblätter in Verbindung mit der Propellernabe wird eine wesentliche Schubverbesserung, vor allem beim Start und im Steigflug, erreicht. Beim Start resultiert daraus eine wesentliche Verkürzung der Startstrecke, was zu einer erheblichen Herabsetzung der Lärmbelästigung von Anrainern an Flugplätzen führt. Ferner wird mit der Schubverbesserung bei zweimotorigen Flugzeugen zusätzlich eine Erhöhung des durch die Einmotoren-Steigleistung begrenzten Abfluggewichtes bewirkt. Daraus resultiert eine Erhöhung der Nutzlast und bzw. oder der Reichweite dieser Flugzeugkategorie und damit eine Verbesserung der Wirtschaftlichkeit. Durch die verkürzte Startstrecke und die grössere Reichweite wird ferner der Einsatzbereich von Flugzeugen erweitert.

Weitere Vorteile, Merkmale bzw. Ausbildungen der Erfindung ergeben sich aus der Zeichnung und der zugehörigen Beispielsbeschreibung.

In der Zeichnung zeigt:

Figur 1 in einem Diagramm den Propellerschub in Abhängigkeit von der Fluggeschwindigkeit einer Reihe bisher ausgeführter Propellerausbildungen im Vergleich zur theoretischen Schubgrenze,

Figur 2 in einem Diagramm den Verlauf der grössten Wölbungshöhe in Abhängigkeit von der Lage der grössten Wölbungshöhe mit Bezug auf die Blattlängserstreckung, entsprechend der erfindungsgemässen Ausbildung,

Figur 2a in schematischer Darstellung Bemessungsangaben an einem Propellerblatt in einem Blattquerschnitt, entsprechend dem Diagramm der Figur 2,

Figur 3 in einem Diagramm den Verlauf der Blatt-Tiefe über die Blattlänge der Ausbildung gemäss Figur 2 bzw. Figur 2a,

Figur 3a in schematischer Darstellung ein Propellerblatt gemäss Figur 2 bzw. 2a in einer Draufsicht mit Angabe der Auslegungsverhältnisse bezüglich des Verlaufes der Blatt-Tiefe über die Blattlänge nach Figur 3,

Figur 4 in einem Diagramm die Abhängigkeit des Propellerschubes von der Fluggeschwindigkeit im Vergleich der erfindungsgemässen Propellerausbildung mit einer Reihe bisher bekannter Ausbildungen (Figur 1) und

Tabelle 1 bis 6 Profilkoordinaten an Blattdefinitionsschnitten.

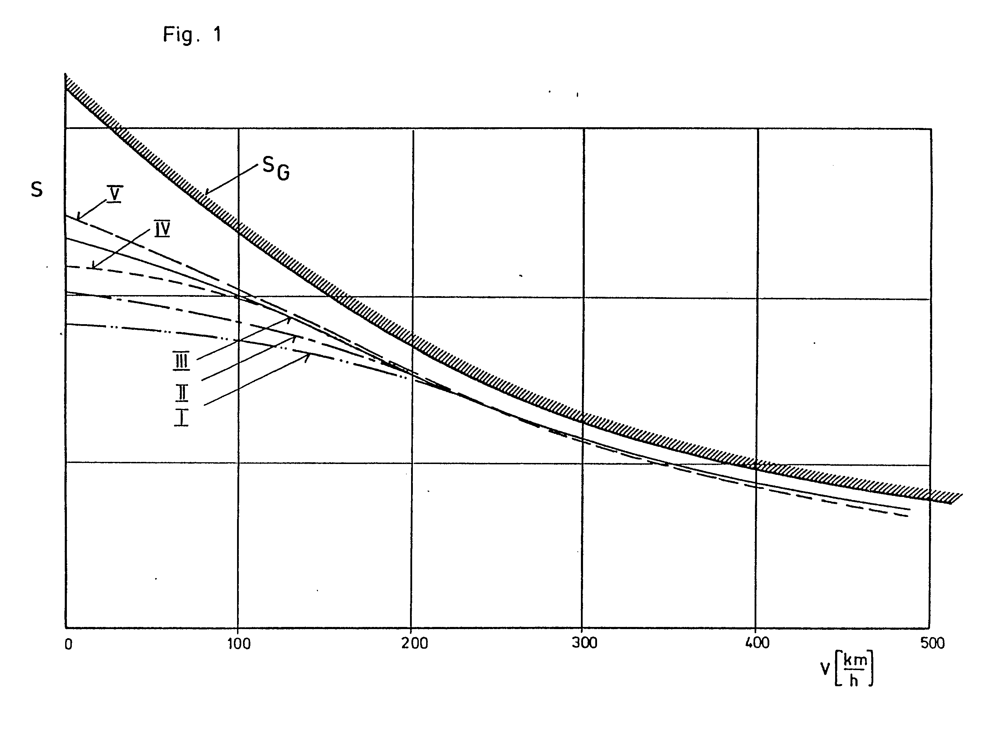

Bei dem in Figur 1 dargestellten rechtwinkeligen, ebenen Koordinatensystem ist auf der Abszisse die Fluggeschwindigkeit V (km/h) und auf der Ordinate der Propellerschub S aufgetragen. Den sich aus der Abhängigkeit des Propellerschubes S von der Fluggeschwindigkeit V (km/h) ergebenden Kennlinien I, II,

III, IV und V, liegen Werte bekannter Propellerausbildungen zugrunde.

Ferner bezeichnet $S_G$ des Diagramms die Kennlinie der theoretischen Schubgrenze nach der Impulstheorie. Aus dem gezeigten Vergleich ist erkennbar, dass sich mit den bisher bekannten Propellerausbildungen im Stand nur Schubhöhen in der Grössenordnung zwischen etwa 50 bis 70 % und im Reiseflug von annähernd 90 % der nach der Impulstheorie maximal möglichen Schubwerte erzielen lassen. Der Vergleich gemäss Figur 1 geht dabei von einer konstanten Leistung sowie Drehzahl und einem Propeller mit einer Blattanzahl von drei bzw. vier Propellerblättern aus.

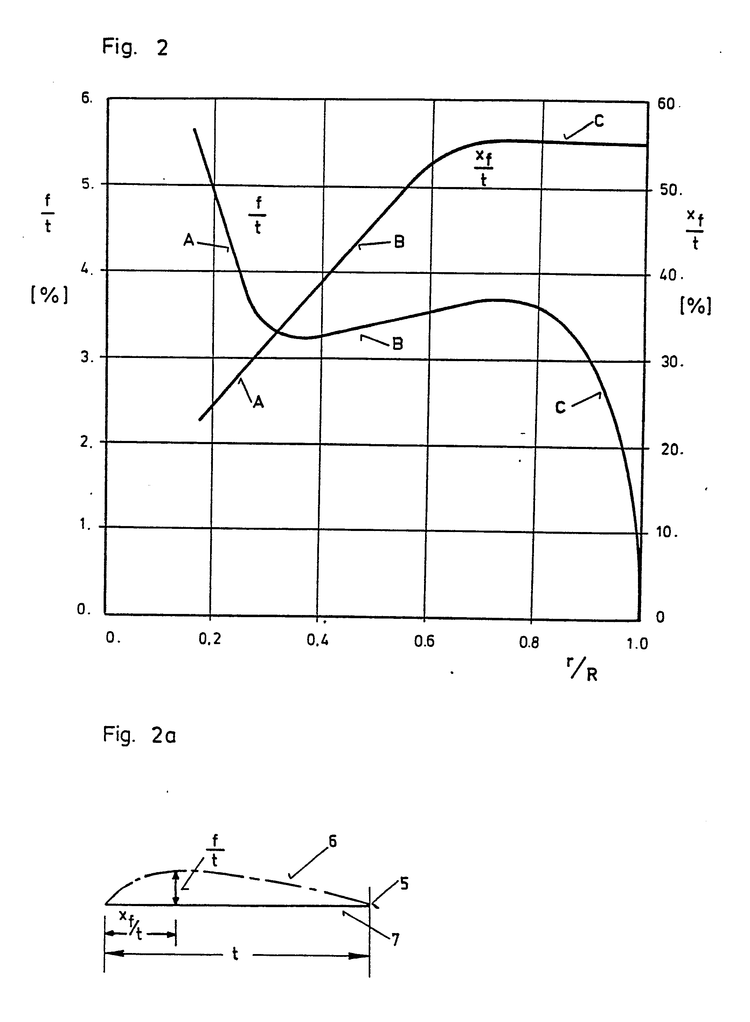

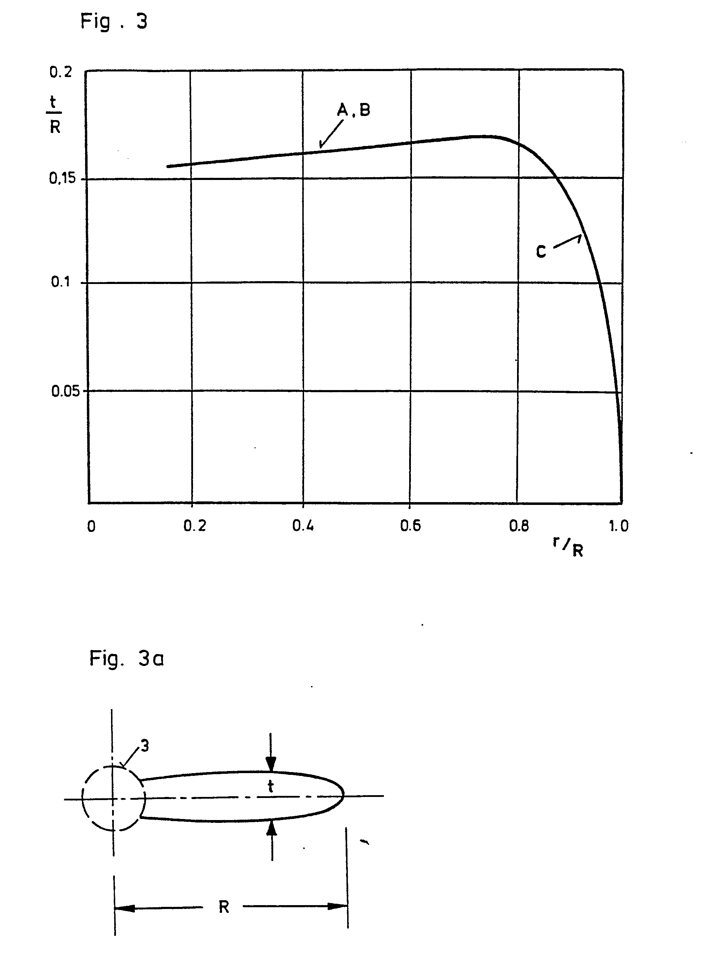

In Figur 2 bzw. 3 ist mit Hilfe von Koordinatensystemen die erfindungsgemässe Ausbildung von Propellerblättern gezeigt. In dem in Figur 2 dargestellten Koordinatensystem ist auf der einen Ordinate die grösste Wölbungshöhe f/t und auf der zweiten Ordinate die Lage der grössten Wölbungshöhe $x_f/t$ (in Prozent) und auf der Abszisse die Blattlänge r/R aufgetragen, wobei r den lokalen Radius, bezogen auf den Propellerradius R bezeichnet. Ferner bezeichnet f/t bzw. $x_f/t$ die Kennlinie der grössten Wölbungshöhe bzw. der Lage der grössten Wölbungshöhe mit Bezug auf die Propellerblatt-Tiefe t (Figur 2a). Nach dem Verlauf der Kennlinie für die grösste Wölbungshöhe f/t weist das Propellerblatt drei unterschiedliche Abschnitte A, B bzw. C, etwa gleicher Erstreckung in Richtung der Blattlänge r/R, auf.

Figur 2a lässt im Hinblick auf das Diagramm nach Figur 2 Bemessungserläuterungen für die grösste Wölbungshöhe f/t und die Lage der jeweilig grössten Wölbungshöhe $x_f/t$, bezogen auf die Propellerblatt-Tiefe t im Querschnitt eines Blattes erkennen. Strichpunktiert ist dabei die Skelettlinie 6 des Propellerblattes in Verbindung mit der Propellerblatt-Tiefe t angedeutet. Ferner ist mit 7 die Profilsehne des Blattes bezeichnet. Die Wölbungshöhe f/t ist angegeben durch den jeweilig grössten Abstand zwischen der Blattsehne 7 und der Skelettlinie 6 (Figur 2a). Innerhalb des inneren, den Blattwurzelbereich einschliessenden Abschnittes A, der eine Erstreckung von r/R = 0,17 ± 0,05 bis 0,35 ± 0,05, entsprechend 17 % ± 5 % bis 35 % ± 5 % des Radius R aufweist, besitzt das Propellerblatt infolge der grössten Beanspruchung die grösste Dicke. Die Profilierung ist dabei bis zur Propellernabe 3 ausgeführt, um die Ausbildung eines Zusatzwiderstandes zu vermeiden. Die Profilierung ist ferner in diesem Bereich (Propellernabe) von Bedeutung, um die Coriolisbeschleunigung zu nutzen. Durch diese Maßnahme wird der nutzbare Auftrieb, dass heisst der nutzbare Schub S des inneren Abschnittes A verstärkt, da durch die Coriolisbeschleunigung eine Absaugwirkung auf das Grenzschichtmaterial bewirkt wird.

Entsprechend Figur 2 nimmt im Abschnitt A über die Blattlänge r/R die grösste Wölbungshöhe von etwa 5,6 % ± 0,3 % auf 3,2 % ± 0,3 % ab. Dabei verändert sich gleichzeitig die Lage der maximalen Wölbungshöhe $x_f/t$ über die Blattlänge r/R ausgehend von der Nabe 3 (Figur 3a) in Richtung zur Blatthinterkante 5 hin linear von 20 % ± 5 % auf 35 % ± 5 %. Der mittlere Abschnitt B, der einen Bereich in Richtung der Blattlänge von r/R = 0,35 ± 0,05 bis 0,7 ± 0,05, entsprechend 35 % ± 5 % bis 70 % ± 5 % des Radius R einschliesst, erzeugt einen grossen Teil des Schubes. Innerhalb dieses Abschnittes B nimmt gemäss der Kennlinie f/t nach Figur 2 die grösste Wölbungshöhe f/t linear von 3,2 % ± 0,3 % auf 3,7 % ± 0,3 % zu. Ebenso verändert sich die Lage der grössten Wölbungshöhe $x_f/t$ über die Blattlänge r/R in Richtung auf die Blatthinterkante 5 linear von 35 % ± 5 % auf 55 % ± 5 % der Propellerblatt-Tiefe t.

Schliesslich ist der äussere Abschnitt C, der sich in Richtung der Blattlänge r/R von 0,7 ± 0,05 bis 1,0, entsprechend 70 % bis ± 100 % des Radius R erstreckt, dadurch charakterisiert, dass nach der Kennlinie f/t die grösste Wölbungshöhe f/t etwa elliptisch von 3,7 % ± 0,3 % auf Null abfällt und ferner die Lage der grössten Wölbungshöhe $x_f/t$ konstant bei 55 % ± 5 % der Blatt-Tiefe t bleibt.

In Figur 3 bzw. 3a ist der Verlauf der Kennlinie t/R der Blatt-Tiefenverteilung für das beschriebene, bevorzugte Ausführungsbeispiel dargestellt. Dabei ist auf der Ordinate des Diagramms das Blatt-Tiefenverhältnis und auf der Abszisse die Blattlänge r/R aufgetragen. Mit t ist die Propellerblatt-Tiefe, mit 3 die Propellernabe und mit R der Propellerradius, entsprechend der Blattlänge, bezeichnet.

Gemäss Figur 3 bzw. 3a nimmt entsprechend dem Kennlinien verlauf die Blatt-Tiefenverteilung im Bereich des die Blattwurzel einschliessenden Abschnittes A und im mittleren Abschnitt B linear von 15 % ± 3 % auf 17 % ± 3 % zu und innerhalb des Blattabschnittes C von 17 % ± 3 % des Radius R zur Blattspitze hin etwa elliptisch auf den Wert Null ab. Die Blattverwindung wird dabei auf bekannte Weise nach der Auslegegeschwindigkeit V des Flugzeuges optimiert.

Wie aus den Tabellen 1 bis 6 ersichtlich, werden die Blattprofile in dimensionsloser Darstellung in sechs Profilschnitten über die Abschnitte A, B bzw. C angegeben, und zwar bezeichnet r/R die dimensionslose Lage der Definitionsprofile in radialer Richtung und t/R die dimensionslose Blatt-Tiefe entsprechend den Angaben gemäss Figur 3. Ferner ist x/t die dimensionslose Abszisse, $z_o/t$ sind die zu x/t zugehörigen Profiloberseitenkoordinaten und $z_u/t$ die zu x/t zugehörigen Profilunterseitenkoordinaten. Sämtliche Werte sind jeweils mit Hilfe der Profiltiefe t dimensionslos gemacht.

Durch die Blattdefinition gemäss Figur 2 bzw. 3 wird eine gleichförmigere Abwind-Geschwindigkeitsverteilung erreicht, als bei bisher bekannt gewordenen Propellerausführungen. Geringe Übergeschwindigkeiten bei gegebenem Schub führen zu einem höheren Vortriebswirkungsgrad und ebenso zu einer Verringerung der Lärmentwicklung.

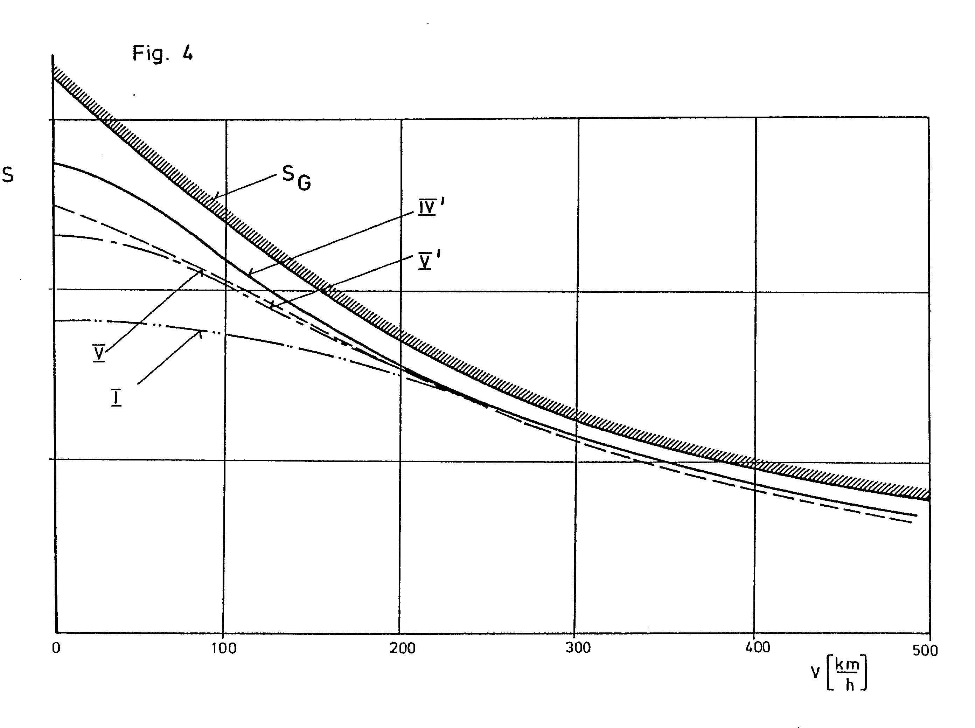

Gemäss dem Diagramm nach Figur 4 ist der durch Messungen bestätigte Schubverlauf eines nach der Ausführung entsprechend Figur 2 bzw. 3 entworfenen Propellers mit den Schubverläufen bekannter Propellerausbildungen (vergleiche Figur 1) verglichen.

Die Ziffern I und V bezeichnen dabei Kennlinien bekannter Propellerausbildungen nach Figur 1 und IV' bzw. V' Kennlinien der Propellerausbildung gemäss der Erfindung.

Ferner ist auch hier die theoretische Schubgrenze mit $S_G$, der Schub mit S und die Geschwindigkeit mit V bezeichnet. Die Vierblatt-Ausführung eines erfindungsgemäss ausgebildeten Propellers (durchgehend dick ausgezogene Linie IV') ist insbesondere im Start- und Steigflugbereich bekannten Propellerausbildungen überlegen. Auch im Schnellflugbereich wird eine Verbesserung erzielt.

Der erfindungsgemässe Dreiblattpropeller, in der Ausführung gemäss Figur 2 bzw. 3 (ausgezogene strichpunktierte Linie V'), ist in seiner Leistung etwa gleichzusetzen einem herkömmlich ausgelegten Vierblattpropeller und hat diesem gegenüber wegen der geringeren, notwendigen Blattanzahl den Vorteil des geringeren Gewichts.

Tabelle 1

| $\dfrac{r}{R} = 0,22$ | | |
|---|---|---|
| $\dfrac{t}{R} = 0,158$ | | |
| $\dfrac{x}{t}$ | $\dfrac{z_o}{t}$ | $\dfrac{z_u}{t}$ |
| 0.0 | 0.0046 | 0.0046 |
| 0.010 | 0.0494 | -0.0343 |
| 0.025 | 0.0771 | -0.0506 |
| 0.050 | 0.1091 | -0.0666 |
| 0.075 | 0.1343 | -0.0780 |
| 0.100 | 0.1549 | -0.0878 |
| 0.150 | 0.1860 | -0.1030 |
| 0.200 | 0.2067 | -0.1142 |
| 0.250 | 0.2191 | -0.1225 |
| 0.300 | 0.2238 | -0.1282 |
| 0.350 | 0.2209 | -0.1316 |
| 0.400 | 0.2089 | -0.1324 |
| 0.450 | 0.1966 | -0.1303 |
| 0.500 | 0.1806 | -0.1255 |
| 0.550 | 0.1641 | -0.1174 |
| 0.600 | 0.1470 | -0.1052 |
| 0.650 | 0.1296 | -0.0900 |
| 0.700 | 0.1122 | -0.0740 |
| 0.750 | 0.0953 | -0.0591 |
| 0.800 | 0.0787 | -0.0459 |
| 0.850 | 0.0624 | -0.0348 |
| 0.900 | 0.0463 | -0.0255 |
| 0.950 | 0.0305 | -0.0182 |
| 1.000 | 0.0150 | -0.0150 |

Tabelle 2

| $\dfrac{r}{R} = 0,366$ | | |
|---|---|---|
| $\dfrac{t}{R} = 0,161$ | | |
| $\dfrac{x}{t}$ | $\dfrac{z_o}{t}$ | $\dfrac{z_u}{t}$ |
| 0.0 | 0.0016 | 0.0016 |
| 0.010 | 0.0185 | -0.0150 |
| 0.025 | 0.0326 | -0.0235 |
| 0.050 | 0.0497 | -0.0311 |
| 0.075 | 0.0632 | -0.0372 |
| 0.100 | 0.0743 | -0.0423 |
| 0.150 | 0.0919 | -0.0502 |
| 0.200 | 0.1050 | -0.0560 |
| 0.250 | 0.1144 | -0.0603 |
| 0.300 | 0.1207 | -0.0634 |
| 0.350 | 0.1242 | -0.0653 |
| 0.400 | 0.1252 | -0.0658 |
| 0.450 | 0.1239 | -0.0658 |
| 0.500 | 0.1199 | -0.0626 |
| 0.550 | 0.1130 | -0.0580 |
| 0.600 | 0.1035 | -0.0531 |
| 0.650 | 0.0917 | -0.0455 |
| 0.700 | 0.0784 | -0.0376 |
| 0.750 | 0.0651 | -0.0300 |
| 0.800 | 0.0521 | -0.0232 |
| 0.850 | 0.0390 | -0.0175 |
| 0.900 | 0.0256 | -0.0130 |
| 0.950 | 0.0120 | -0.0095 |
| 1.000 | -0.0017 | -0.0085 |

(Fortsetzung)

**Tabelle 3**

$$\frac{r}{R} = 0{,}513$$

$$\frac{t}{R} = 0{,}164$$

| $\dfrac{x}{t}$ | $\dfrac{z_o}{t}$ | $\dfrac{z_u}{t}$ |
|---|---|---|
| 0.0 | 0.0051 | 0.0051 |
| 0.010 | 0.0219 | -0.0113 |
| 0.025 | 0.0353 | -0.0184 |
| 0.050 | 0.0492 | -0.0229 |
| 0.075 | 0.0587 | -0.0265 |
| 0.100 | 0.0664 | -0.0295 |
| 0.150 | 0.0783 | -0.0332 |
| 0.200 | 0.0869 | -0.0358 |
| 0.250 | 0.0932 | -0.0374 |
| 0.300 | 0.0974 | -0.0383 |
| 0.350 | 0.0996 | -0.0385 |
| 0.400 | 0.0999 | -0.0382 |
| 0.450 | 0.0982 | -0.0371 |
| 0.500 | 0.0947 | -0.0352 |
| 0.550 | 0.0895 | -0.0318 |
| 0.600 | 0.0827 | -0.0271 |
| 0.650 | 0.0744 | -0.0218 |
| 0.700 | 0.0648 | -0.0168 |
| 0.750 | 0.0538 | -0.0128 |
| 0.800 | 0.0424 | -0.0101 |
| 0.850 | 0.0307 | -0.0088 |
| 0.900 | 0.0190 | -0.0088 |
| 0.950 | 0.0000 | -0.0103 |
| 1.000 | -0.0029 | -0.0129 |

**Tabelle 4**

$$\frac{r}{R} = 0{,}659$$

$$\frac{t}{R} = 0{,}167$$

| $\dfrac{x}{t}$ | $\dfrac{z_o}{t}$ | $\dfrac{z_u}{t}$ |
|---|---|---|
| 0.0 | 0.0046 | 0.0046 |
| 0.010 | 0.0214 | -0.0117 |
| 0.025 | 0.0334 | -0.0185 |
| 0.050 | 0.0446 | -0.0221 |
| 0.075 | 0.0519 | -0.0244 |
| 0.100 | 0.0574 | -0.0257 |
| 0.150 | 0.0659 | -0.0258 |
| 0.200 | 0.0719 | -0.0245 |
| 0.250 | 0.0763 | -0.0224 |
| 0.300 | 0.0794 | -0.0198 |
| 0.350 | 0.0814 | -0.0172 |
| 0.400 | 0.0823 | -0.0142 |
| 0.450 | 0.0821 | -0.0114 |
| 0.500 | 0.0807 | -0.0088 |
| 0.550 | 0.0783 | -0.0062 |
| 0.600 | 0.0747 | -0.0036 |
| 0.650 | 0.0699 | -0.0013 |
| 0.700 | 0.0637 | 0.0001 |
| 0.750 | 0.0554 | 0.0006 |
| 0.800 | 0.0455 | 0.0 |
| 0.850 | 0.0348 | -0.0016 |
| 0.900 | 0.0216 | -0.0039 |
| 0.950 | 0.0103 | -0.0074 |
| 1.000 | -0.0017 | -0.0115 |

**Tabelle 5**

$$\frac{r}{R} = 0{,}806$$

$$\frac{t}{R} = 0{,}164$$

| $\dfrac{x}{t}$ | $\dfrac{z_o}{t}$ | $\dfrac{z_u}{t}$ |
|---|---|---|
| 0.0 | 0.0038 | 0.0038 |
| 0.010 | 0.0167 | -0.0098 |
| 0.025 | 0.0265 | -0.0145 |
| 0.050 | 0.0354 | -0.0177 |
| 0.075 | 0.0415 | -0.0194 |
| 0.100 | 0.0462 | -0.0203 |
| 0.150 | 0.0531 | -0.0198 |
| 0.200 | 0.0582 | -0.0179 |
| 0.250 | 0.0618 | -0.0152 |
| 0.300 | 0.0643 | -0.0122 |
| 0.350 | 0.0659 | -0.0091 |
| 0.400 | 0.0666 | -0.0062 |
| 0.450 | 0.0666 | -0.0035 |
| 0.500 | 0.0658 | -0.0012 |
| 0.550 | 0.0641 | 0.0007 |
| 0.600 | 0.0617 | 0.0021 |
| 0.650 | 0.0583 | 0.0029 |
| 0.700 | 0.0537 | 0.0032 |
| 0.750 | 0.0475 | 0.0028 |
| 0.800 | 0.0398 | 0.0018 |
| 0.850 | 0.0305 | 0.0001 |
| 0.900 | 0.0203 | -0.0025 |
| 0.950 | 0.0103 | -0.0057 |
| 1.000 | -0.0000 | -0.0100 |

**Tabelle 6**

$$\frac{r}{R} = 0{,}952$$

$$\frac{t}{R} = 0{,}096$$

| $\dfrac{x}{t}$ | $\dfrac{z_o}{t}$ | $\dfrac{z_u}{t}$ |
|---|---|---|
| 0.0 | 0.0038 | 0.0038 |
| 0.010 | 0.0120 | -0.0064 |
| 0.025 | 0.0194 | -0.0106 |
| 0.050 | 0.0259 | -0.0136 |
| 0.075 | 0.0303 | -0.0150 |
| 0.100 | 0.0339 | -0.0157 |
| 0.150 | 0.0390 | -0.0151 |
| 0.200 | 0.0427 | -0.0132 |
| 0.250 | 0.0454 | -0.0108 |
| 0.300 | 0.0472 | -0.0081 |
| 0.350 | 0.0483 | -0.0054 |
| 0.400 | 0.0488 | -0.0028 |
| 0.450 | 0.0488 | -0.0006 |
| 0.500 | 0.0481 | 0.0013 |
| 0.550 | 0.0468 | 0.0028 |
| 0.600 | 0.0450 | 0.0037 |
| 0.650 | 0.0424 | 0.0041 |
| 0.700 | 0.0390 | 0.0039 |
| 0.750 | 0.0345 | 0.0032 |
| 0.800 | 0.0288 | 0.0018 |
| 0.850 | 0.0221 | -0.0002 |
| 0.900 | 0.0149 | -0.0027 |
| 0.950 | 0.0075 | -0.0060 |
| 1.000 | 0.0 | -0.0100 |

# 0 106 257

**Patentansprüche**

1. Schuberzeugungsorgan, insbesondere für den Vortrieb von Luftfahrzeugen, wie Propeller oder dergleichen, dadurch gekennzeichnet, dass die Propellerblätter über ihre Länge bzw. den Propellerradius (R) drei Abschnitte (A, B, C) gleicher bzw. annähernd gleicher Längserstreckung aufweisen, wobei im inneren, den Nabenbereich einschliessenden Abschnitt (A) über die Blattlänge (r/R) die grösste Wölbungshöhe (f), bezogen auf die Blatt-Tiefe (t), in Richtung auf die Blattspitze linear bzw. annähernd linear abnehmend verläuft und sich die Lage der grössten Wölbungshöhe ($x_f$), bezogen auf die Blatt-Tiefe (t), in Richtung zur Blatthinterkante (5) hin linear bzw. annähernd linear verlagert, im mittleren Abschnitt (B) über die Blattlänge (r/R) die grösste Wölbungshöhe (f), bezogen auf die Blatt-Tiefe (t), linear bzw. annähernd linear zunehmend verläuft und sich die Lage der grössten Wölbungshöhe ($x_f$) anschliessend an den Verlauf des inneren Abschnittes (A), bezogen auf die Blatt-Tiefe (t), zur Blatthinterkante (5) hin, linear bzw. annähernd linear verlagert und im äusseren Abschnitt (C) über die Blattlänge (r/R) die grösste Wölbungshöhe (f), bezogen auf die Blatt-Tiefe (t), elliptisch bzw. annähernd elliptisch abnehmend verläuft und die Lage der grössten Wölbungshöhe ($x_f$), bezogen aud die Blatt-Tiefe (t), anschliessend an den mittleren Abschnitt (B), konstant bzw. annähernd konstant bleibt.

2. Propeller nach Anspruch 1, dadurch gekennzeichnet, dass innerhalb des inneren (A) und des mittleren (B) Abschnitts die Blatt-Tiefenverteilung (t/R) über die Blattlänge (r/R) etwa linear zunehmend und im anschliessenden Abschnitt (C) etwa elliptisch auf den Wert Null abnehmend ausgeführt ist.

3. Propeller nach Anspruch 1 oder 2, dadurch gekennzeichnet, dass

a) im inneren Abschnitt (A) über die Blattlänge (r/R) = 0,17 ± 0,05 bis 0,35 ± 0,05, entsprechend 17 % ± 5 % bis 35 % ± 5 % des Radius (R), die grösste Wölbungshöhe (f/t) linear von 5,6 % ± 0,3 % auf 3,2 % ± 0,3 % abnehmend verläuft und die Lage der grössten Wölbungshöhe ($x_f$/t) sich in Richtung auf die Blatthinterkante (5) von 20 % ± 5 % auf 35 % ± 5 % verlagert, dass

b) im mittleren Abschnitt (B) über die Blattlänge (r/R = 0,35 ± 0,05 bis 0,7 ± 0,05, entsprechend 35 % ± 5 % bis 70 % ± 5 % des Radius (R), die grösste Wölbungshöhe (f/t) linear von 3,2 ± 0,3 % auf 3,7 %± 0,3 % zunehmend verläuft und die Lage der grössten Wölbungshöhe ($x_f$/t) sich in Richtung auf die Blatthinterkante (5) von 35 % ± 5 % auf 55 % ± 5 % verlagert und dass

c) im äusseren Abschnitt (C) über die Blattlänge (r/R) = 0,7 ± 0,05 bis 1,0, entsprechend 70-% ± 5 % bis 100 % des Radius (R), die grösste Wölbungshöhe (f/t) etwa elliptisch von 3,7 % ± 0,3 % auf den Wert Null abfallend verläuft und die Lage der grössten Wölbungshöhe ($x_f$/t) in Richtung auf die Blatthinterkante (5) konstant bei 55 % ± 5 % liegt.

4. Propeller nach Anspruch 1 bis 3, dadurch gekennzeichnet, dass innerhalb des inneren (A) und des mittleren (B) Abschnitts die Blatt-Tiefenverteilung (t/R) über die Blattlänge (r/R) linear von 15 % ± 3 % auf 17 % ± 3 % zunehmend und im äusseren Abschnitt (C) von etwa 17 % ± 3 % auf den Wert Null etwa elliptisch abnehmend ausgeführt ist.

5. Propeller nach Anspruch 1 bis 4, dadurch gekennzeichnet, dass die Blattprofilierung (f/t ; $x_f$/t) des inneren Abschnittes (A) den Blattwurzelbereich bis zur Propellernabe (3) einschliesst.

6. Propeller nach Anspruch 1 bis 5, dadurch gekennzeichnet, dass der innere (A), der mittlere (B) und der äussere (C) Abschnitt über ihre Längserstreckung (r/R) Profilkoordinaten, entsprechend den beigefügten Tabellen (1 bis 6) aufweisen, und zwar der innere Abschnitt (A) Profilkoordinaten nach den Tabellen 1 bzw. 2, der mittlere Abschnitt (B) Profilkoordinaten nach den Tabellen 2, 3 bzw. 4 und der äussere Abschnitt (C) Profilkoordinaten nach den Tabellen 4, 5 bzw. 6.

**Claims**

1. Thrust-producing device, particularly for the propulsion of aircraft, such as a propeller of the like, in which the propeller blade having a varying profile camber over its length or propeller radius (R), said propeller blade comprises three sections (A, B, C) of equal or substantially equal length, where the largest camber height (f) which extends in the inner section (A), including the hub region, referred to the blade chord length (t), decreases linearly or substantially linearly over the blade length (r/R) towards the blade tip, and the chordwise location of the largest camber height ($x_f$), referred to the blade chord length (t), shifts linearly or substantially linearly towards the trailing edge (5) of the blade ; the largest camber height (f) which extends in the middle section (B), referred to the blade chord length (t), increases linearly or substantially linearly over the length of the blade (r/R), and the chordwise location of the largest camber height ($x_f$) shifts towards the trailing edge of the blade and follows the course of the inner section (A), linearly or substantially linearly ; and the largest camber height (f), referred to the blade chord length (t), which extends in the outer section (C) decreases elliptically or substantially elliptically over the length of the blade (r/R), and the chordwise location of the largest camber height ($x_f$), referred to the blade chord length (t) following the middle section (B), remains constant or substantially constant.

2. Propeller of claim 1, where within said inner section (A) and said middle section (B) the distribution of the blade chord length (t/R) increases approximately linearly over the blade length (r/R) and decreases approximately elliptically to the value zero in said outer section (C).

3. Propeller of claim 1 or 2, where

6

a) in the inner section (A) the largest camber height (f) which extends over the blade length $(r/R) = 0.17 \pm 0.05$ to $0.35 \pm 0.05$, corresponding to $17\% \pm 5\%$ to $35\% \pm 5\%$ of the radius (R) decreases linearly from $5.6\% \pm 0.3\%$ to $3.2\% \pm 0.3\%$ and the chordwise location of the largest camber height ($x_f/t$) shifts towards the trailing edge (5) of the blade linearly from $20\% \pm 5\%$ to $35\% \pm 5\%$ ;

b) in the middle section (B) the largest camber height (f/t), which extends over the blade length $(r/R) = 0.35 \pm 0.05$ to $0.7 \pm 0.05$ corresponding to $35\% \pm 5\%$ to $70\% \pm 5\%$ of the radius (R), increases linearly from $3.2\% \pm 0.3\%$ to $3.7\% \pm 0.3\%$, and the chordwise location of the largest height ($x_f/t$), shifts linearly towards the trailing edge (5) of the blade from $35\% \pm 5\%$ to $55\% \pm 5\%$ ; and

c) in the outer section (C) the largest camber height (f/t) which extends over the blade length $(r/R) = 0.7 \pm 0.05$ to $1.0$, corresponding to $70\% \pm 0.05\%$ to $100\%$ of the radius (R), decreases approximately elliptically from $3.7\% \pm 0.3\%$ to the value zero and the chordwise location of the largest camber height ($x_f/t$), referred to the blade chord length (t), towards the trailing edge (5) is constant at $55\% \pm 5\%$.

4. Propeller according to the claims 1 to 3, where in inner section (A) and middle section (B) the distribution of the blade chord length (t/R) over the blade length (r/R) increases linearly from $15\% \pm 3\%$ to $17\% \pm 3\%$ and decreases approximately elliptically in the outer section (C) from about $17\% \pm 3\%$ to the value zero.

5. Propeller according to the claims 1 to 4, where the blade profiling (f/t, $x_f/t$) in the inner section (A) encloses the region of the blade root up to the propeller hub.

6. Propeller according to the claims 1 to 5, where the inner section (A), the middle section (B) and the outer section (C) over their blade length (r/R) show profile coordinates according to the tables 1 to 6, the inner section (A) according to the tables 1 or 2, the middle section (B) according to the tables 2, 3 or 4 and the outer section (C) according to the tables 4, 5 or 6.


## Revendications

1. Organe générateur de poussée, tel qu'hélice ou analogue, en particulier pour la propulsion d'aéronefs, caractérisé par le fait que les pales de l'hélice présentent sur leur longueur, ou rayon de l'hélice (R) trois segments (A, B, C) de longueur identique ou pratiquement identique, tels que dans le segment intérieur (A), renfermant la zone du moyeu, la plus grande hauteur de profil (f) rapportée à la profondeur de pale (t) se réduit linéairement ou pratiquement linéairement en direction de la pointe de la pale sur toute la longueur de la pale (r/R) et que la position de la plus grande hauteur de profil ($x_f$), rapportée à la profondeur de pale (t), est déplacée linéairement ou pratiquement linéairement en direction du bord arrière (5) de la pale, dans le segment central (B) la plus grande hauteur de profil (f) rapportée à la profondeur de pale (t) augmente linéairement ou pratiquement linéairement et la position de plus grande hauteur de profil ($x_f$) à la suite du segment intérieur (A) rapportée à la profondeur de pale (t) est déplacée linéairement ou pratiquement linéairement en direction du bord arrière (5) de la pale et, dans le segment extérieur (C), la plus grande hauteur du profil (f) diminue elliptiquement ou pratiquement elliptiquement sur la longueur de la pale (r/R) et la position de la plus grande hauteur de profil ($x_f$) rapportée à la profondeur de pale (t) à la suite du segment central (B) reste constante ou pratiquement constante.

2. Hélice selon la revendication 1, caractérisée par le fait qu'à l'intérieur du segment intérieur (A) et du segment central (B) la répartition des profondeurs de pale (t/R) augmente pratiquement linéairement sur la longueur de la pale (r/R) et que dans le segment suivant (C) la profondeur de pale diminue selon un tracé pratiquement elliptique jusqu'à atteindre la valeur zéro.

3. Hélice selon la revendication 1 ou 2, caractérisée par le fait que

a) dans le segment intérieur (A) sur la longueur de pale $(r/R) = 0.17 \pm 0.5$ à $0.35 \pm 0.5$, ce qui correspond à $17\% \pm 5\%$ à $35\% \pm 5\%$ du rayon (R), la plus grande hauteur de profil (f/t) diminue linéairement de $5.6\% \pm 0.3\%$ à $3.2\% \pm 3\%$ et que la position de la plus grande hauteur de profil ($x_f/t$) est déplacée en direction du bord arrière (5) de la pale de $20\% \pm 5\%$ à $35\% \pm 5\%$, que

b) dans le segment central (B) sur la longueur de pale $(r/R) = 0.35 \pm 0.05$ à $0.7 \pm 0.05$, ce qui correspond à $35\% \pm 5\%$ à $70\% \pm 5\%$ du rayon (R), la plus grande hauteur de profil (f/t) augmente linéairement de $3.2\% \pm 0.3\%$ à $3.7\% \pm 0.3\%$ et que la position de la plus grande hauteur de profil ($x_f/t$) est déplacée en direction du bord arrière (5) de la pale de $35\% \pm 5\%$ à $55\% \pm 5\%$ et que

c) dans le segment extérieur (C) sur la longueur de pale $(r/R) = 0.7 \pm 0.05$ à $1.0$ ce qui correspond à $70\% \pm 5\%$ à $100\%$ du rayon (R), la plus grande hauteur de profil (f/t) décroît pratiquement elliptiquement de $3.7\% \pm 3\%$ jusqu'à la valeur zéro et que la position de la plus grande hauteur de profil ($x_f/t$) reste constante à $55\% \pm 5\%$ en direction du bord arrière (5) de la pale.

4. Hélice selon les revendications 1 à 3, caractérisée par le fait qu'à l'intérieur du segment intérieur (A) et du segment central (B) la répartition (t/R) des profondeurs de pale sur la longueur de la pale (r/R) augmente linéairement de $15\% \pm 3\%$ à $17\% \pm 3\%$ et que dans le segment extérieur (C) elles diminuent en passant d'environ $17\% \pm 3\%$ à la valeur zéro en suivant un tracé sensiblement elliptique.

5. Hélice selon les revendications 1 à 4, caractérisée par le fait que le profilage de la pale (f/t ; $x_f/t$) englobe le segment intérieur (A), la zone du pied de la pale jusqu'au moyen de l'hélice (3).

6. Hélice selon les revendications 1 à 5, caractérisée par le fait que le segment intérieur (A), le segment central (B) et le segment extérieur (C) présentent sur leurs longueurs (r/R) des coordonnées de profil qui correspondent aux tableaux annexés (1 à 6), le segment intérieur présentant des coordonnées de profil conformes aux tableaux 1 ou 2, le segment central (B) des coordonnées de profil conformes aux tableaux 2, 3, 4 et le segment extérieur (C) des coordonnées de profil conformes aux tableaux 4, 5 ou 6.

Fig. 1

$S_G$

$\underline{V}$

$\underline{IV}$

$\underline{III}$
$\underline{II}$
$\underline{I}$

S

$v\left[\dfrac{km}{h}\right]$

0   100   200   300   400   500

Fig. 2

Fig. 2a

Fig . 3

Fig. 3a

Fig. 4